# EUROPÄISCHE PATENTSCHRIFT

(11) **EP 0 751 193 B1**
(45) Veröffentlichungstag und Bekanntmachung des Hinweises auf die Patenterteilung: **21.04.1999**
(21) Anmeldenummer: 96109633.6
(22) Anmeldetag: 15.06.1996
(51) Int. Cl.: C09D 5/06, C09D 11/16

(54) **Wässriges Schreib-, Zeichen- oder Malmittel**
Aqueous composition for writing, drawing or painting
Composition aqueuse pour écrire, dessiner ou peindre

(30) Priorität: 29.06.1995 DE 19523368
(43) Veröffentlichungstag der Anmeldung: 02.01.1997
(73) Patentinhaber: J.S. STAEDTLER GmbH & Co, D-90427 Nürnberg (DE)
(72) Erfinder: Schnorrer, Heinrich, 92421 Schwandorf (DE)

(56) Entgegenhaltungen:
- DE-A- 2 331 636
- US-A- 3 949 132
- DATABASE WPI Week 9527 Derwent Publications Ltd., London, GB; AN 95204083 XP002018856 & JP-A-07 118 582 (MARUJU KASEI) , 9.Mai 1995

## Beschreibung

Die Erfindung betrifft ein wässriges Schreib-, Zeichen- oder Malmittel als Auftragsmaterial, nach dem Oberbegriff des Patentanspruchs 1, das als flüssiges oder pastöses Material vorliegt und in bzw. mit verschiedenen Auftragsgeräten verwendbar ist oder auch mit den Fingern vermalen werden kann.

Derartige Mittel bzw. Materialien sind grundsätzlich bekannt. So wird in **DE-PS 39 03 824** eine wäßrige Malfarbe beschrieben, die aus Stärke und/oder wasserlöslichen Sacchariden als Bindemittel, wasserunlöslichen Sacchariden als Füllstoff, Farbstoffen und ggf. weiteren Zusätzen als Konservierungsmittel, Verdicker, Feuchthaltemittel und/oder Weichmachern besteht.

Weiter wird in der **US-PS 3 949 132** eine siliconhalige Tintenmischung mit organischen Lösungsmitteln beschrieben, die speziell auf glatten Untergründen haftet und nach der Trocknung leicht, beispielsweise trocken abwischbar ist.

Die **DE-PS 31 48 698** offenbart eine ebenfalls im wesentlichen wässrige Malfarbe aus Lösungsmittel, Bindemittel, Farbmittel und mindestens einem grenzflächenaktiven Emulgator sowie ggf. Füllstoffen und/oder sonstigen Zusätzen mit verschiedenen waschaktiven Substanzen.
Derartige Malfarben werden mit verschiedenen Geräten aufgetragen, wie z.B. mit Pinseln oder mit Faser- oder sonstigen Dochtschreibgeräten oder mit Spachteln oder auch mit den Fingern und liegen in der Regel in dünn- bis zähflüssiger oder in pastöser Form vor.
Sie sollen zudem leicht aus- und abwaschbar und ggf. auch toxikologisch unbedenklich sein.

Mit diesen bekannten Mittel sind aber weder durchscheinend opake Abstriche oder Aufträge erzielbar, noch solche, die gut decken oder die ggf. glänzen und/oder durch Druckeinwirkung polierfähig sind.

In der **DE-PS 39 29 391** wird ein Zeichen- und Malmaterial mit pastellartiger Abgabe beschrieben, das in fester Form vorliegt und das einen besonders farbintensiven Auftrag und ein mehrmaliges Überstreichen ermöglichen soll.
Hierzu wird vorgeschlagen, dem in Form von Minen oder Kreiden vorliegenden Malmaterial kugelförmige Glasteilchen mit Teilchengrößen von 0,5 bis 30 µm beizumischen.
Diese festen Mittel sind aber weder in Docht- oder Faserschreib- oder Auftragsgeräten einsetzbar noch direkt mit der Fingern oder mit einem Pinsel vermalbar, wenn sie nicht zusätzlich verflüssigt oder mit Flüssigkeit vermalt werden.

**Aufgabe** der Erfindung ist es daher, ein wässriges Schreib-, Zeichen- oder Malmittel bzw. ein Auftragsmaterial zu schaffen, das die genannten Nachteile nicht aufweist und das insbesondere durchscheinend opake Abstriche bzw. Auftragungen ermöglicht, die möglichst gut decken sowie ggf. glänzen und/oder auch durch Druckeinwirkung polierfähig sind.
Zudem sollen die Abstriche leicht mit Wasser verdünn- und vermalbar sein sowie auf unterschiedlichen Untergründen haften und nach dem Trocknen weitgehend wasserfest werden.

Diese Aufgabe wird mit den Merkmalen des Anspruchs 1 gelöst.

Bevorzugte Ausführungsformen und vorteilhafte Weiterbildungen der Erfindung sind in den weiteren Ansprüchen erfaßt.

Nachfolgend wird die Erfindung anhand einiger Ausführungsbeispiele erläutert.

| **Beispiel 1** (1. Rahmenbeispiel) | |
|---|---|
| Wasser | 40 bis 80 Gew.-% |
| Wachs | 10 bis 50 Gew.-% |
| Farbmittel | 0,1 bis 10 Gew.-% |
| Netzmittel/Emulgator | 0,1 bis 2 Gew.-% |
| weitere Zusätze | 0,01 bis 20 Gew.-% |

| **Beispiel 2** (2. Rahmenbeispiel) | |
|---|---|
| Wasser | 50 bis 77 Gew.-% |
| Wachs | 15 bis 45 Gew.-% |
| Farbmittel | 1 bis 5 Gew.-% |
| Netzmittel/Emulgator | 0,1 bis 1 Gew.-% |
| Konservierungsmittel | 0,01 bis 0,2 Gew.-% |
| Verdickungsmittel | 0 bis 5 Gew.-% |
| Dispergiermittel | 0 bis 2 Gew.-% |
| sonstige Zusätze | 0 bis 12 Gew.-% |

| **Beispiel 3** (3. Rahmenbeispiel) | |
|---|---|
| Wasser | 40 bis 80 Gew.-% |
| Wachs | 10 bis 50 Gew.-% |
| Farbmittel | 0,1 bis 10 Gew.-% |
| Verdickungsmittel | 1 bis 4 Gew.-% |
| Konservierungsmittel | 0,01 bis 0,05 Gew.-% |
| Dispergiermittel | 0,8 bis 1 Gew.-% |
| Netzmittel/Emulgator | 0,3 bis 1 Gew.-% |
| sonstige Zusätze | 0 bis 10 Gew.-% |

| **Beispiel 4** (rote Malfarbe) | |
|---|---|
| Bienenwachs | 15,8 Gew.-% |
| Hydroxypropylgalactomannan | 2,0 Gew.-% |
| Pigment Red 2 | 4,0 Gew.-% |
| Konservierungsmittel | 0,03 Gew.-% |
| Dispergiermittel | 1,0 Gew.-% |
| Netzmittel/Emulgator | 0,4 Gew.-% |
| Wasser | Rest |

| **Beispiel 5** (blaue Malfarbe) | |
|---|---|
| Bienenwachs | 15,8 Gew.-% |
| Hydroxypropylgalactomannan | 2,0 Gew.-% |
| Pigment Blue 16:3 | 4,5 Gew.-% |
| Konservierungsmittel | 0,02 Gew.-% |
| Dispergiermittel | 1,0 Gew.-% |
| Netzmittel | 0,5 Gew.-% |
| Wasser | Rest |

| **Beispiel 6** (Fingermalfarbe) | |
|---|---|
| Bienenwachs | 15,8 Gew.-% |
| Hydroxypropylgalactomannan | 4,0 Gew.-% |
| Pigment Red 2 | 4,0 Gew.-% |
| Konservierungsmittel | 0,02 Gew.-% |
| Dispergiermittel | 1,0 Gew.-% |
| Netzmittel/Emulgator | 1,0 Gew.-% |
| Wasser | Rest |

| **Beispiel 7** (Tinte) | |
|---|---|
| Polyethylenwachs | 34,5 Gew.-% |
| Farbstoff | 1,0 Gew.-% |
| Konservierungsmittel | 0,02 Gew.-% |
| Netzmittel/Emulgator | 0,3 Gew.-% |
| Wasser | Rest |

| **Beispiel 8** (weiße Tinte) | |
|---|---|
| Montanwachs | 26,5 Gew.-% |
| Pigment White 6 | 5,0 Gew.-% |
| Konservierungsmittel | 0,01 Gew.-% |
| Netzmittel | 0,4 Gew.-% |
| Wasser | Rest |

| **Beispiel 9** (gelbe Tinte) | |
|---|---|
| Polyethylenwachs | 44,9 Gew.-% |
| Pigment Yellow 13 | 3,5 Gew.-% |
| Konservierungsmittel | 0,02 Gew.-% |
| Dispergiermittel | 0,8 Gew.-% |
| Netzmittel | 0,6 Gew.-% |
| Wasser | Rest |

Die erfindungsgemäßen wässrigen Schreib-, Zeichen- oder Malmittel bzw. das vorgeschlagene flüssige oder pastöse Auftragsmaterial besteht im wesentlichen aus Wasser als Lösungsmittel, Bindemittel, Farbmittel, Netzmittel und ggf. weiteren Zusätzen, wie Konservierungsmittel, Verdickungsmittel, Füllstoff und/oder sonstigen Zusatzstoffen, wobei das Bindemittel ein Wachs oder ein Wachsgemisch in emulgierter oder in dispergierter Form ist oder enthält.

Von emulgierter Form wird hierbei in dieser Darstellung dann gesprochen, wenn das Wachs in Partikelgrößen von < 1 µm vorliegt, während andererseits im Sinne dieser Erfindung eine Dispersion dann gegeben ist, wenn die Wachspartikel vorzugsweise eine Größe von > 1 bis etwa 10 µm aufweisen. Streng genommen handel es sich bei den vorgeschlagenen Mittel bzw. Massen grundsätzlich um Dispersionen, da die zugesetzten Wachse - und auch die bevorzugt verwendeten Farbpigmente - im Wasser nicht in gelöster Form vorliegen.

Als besonders geeignetes Wachs hat sich Bienenwachs, Montanwachs, Carnaubawachs, Paraffinwachs, Montanawachs, Polyethylenwachs, Polypropylenwachs oder ein Gemisch zweier oder mehrerer derartiger Wachse, im Rahmen deren Verträglichkeiten, erwiesen.

Die Teilchengröße der Wachspartikel sollen < 1 µm sein, besonders bei Tinten für Docht- und sonstige Kapillarschreibgeräte und können bis zu 12 µm, vorzugsweise bis 8 µm betragen, besonders bei pastöseren Mitteln und Materialien, wie z.B. bei Pinsel- oder bei Fingermalfarben.

Das zur guten Haftung auf möglichst allen Flächen und Untergründen zweckmäßige Netzmittel und/oder der Emulgator kann ein Lanolin-Sulfosuccinat, ein ethoxyliertes Lanolin oder Lanolinöl, ein Polyethylen-glycerin-monoisostearat, ein Polyethylen-glycerin-monolaureat, ein Polyoxyethylen-glycerin-monooleat und/oder ein ethoxylierter Fettalkohol sein.

Zur Verdickung oder zur Einstellung der gewünschten Konsistenz kann bevorzugt Hydroxypropylgalaktomannan und/oder ein sonstiges weiteres Bindemittel enthalten sein.

Als Konservierungsmittel dient vorzugsweise ein Isothiazolinon oder ein 2-Brom-2-nitro-1,3-propandiol oder ggf. auch - soweit verträglich - ein Gemisch dieser Substanzen.

Das Farbmittel kann ein wasserlöslicher Farbstoff oder eine Mischung wasserlöslicher Farbstoffe sein und als Farbstoffpulver vorliegen und zugegeben werden oder alternativ und zur Erzielung besonders hoher Deckkraft und Farbbrillanz aus Pigmenten oder aus einem Gemisch mehrerer Farb-Pigmente bestehen, wobei auch diese Pigmente bevorzugt bereits vor der Beimischung in das vorgeschlagene Mittel bzw. Material als Pigmentdispersion, insbesondere als Pigmentteig vorliegen können bzw. sollen.

Zur besonderen Modifizierung des erfindungsgemäßen Mittels und zur Erlangung besondere Effekte der Abstriche, kann noch Calciumcarbonat oder Öl, vorzugsweise Paraffinöl zugesetzt werden.

Als besonders geeignet haben sich Mischungen erwiesen, die 40 bis 80 Gew.-% Wasser, 10 bis 50 Gew.-% Wachs oder Wachsgemisch, 0,1 bis 2 Gew.-% Netzmittel bzw. Emulgator und 0,1 bis 10 Gew.-% Farbmittel sowie 0,01 bis 20 Gew.-% sonstige Zusätze aufweisen.

Vorzugsweise sollte bzw. können sie 50 bis 77 Gew.-% Wasser, 15 bis 45 Gew.-% Wachs oder Wachsgemisch, 0,1 bis 1 Gew.-% Netzmittel bzw. Emulgator, 0,01 bis 0,2 Gew.-% Konservierungsmittel, 1 bis 5 Gew.-% Farbmittel, bis 5 Gew.-% Verdickungsmittel, bis 2 Gew.-% Dispergiermittel und bis 10 Gew.-% sonstige Zusätze enthalten oder sich alternativ aus 40 bis 80 Gew.-% Wasser, 10 bis 50 Gew.-% Wachs oder Wachsgemisch, 0,3 bis 1 Gew.-% Netzmittel, 0,8 bis 1 Gew.-% Dispergiermittel, 0,01 bis 0,2 Gew.-% Konservierungsmittel, 1 bis 3 Gew.-% Verdickungsmittel und 0,1 bis 10 Gew.-% Farbmittel zusammensetzen.

Zur Erzielung anderer oder besonderer Effekte bei den Abstrichen kann außer Kreide oder Öl auch Tusche oder Plakka-Farbe zugegeben oder nach dem Auftrag zur Übermalung oder Aufmischung verwendet werden.

Die erfindungsgemäßen Mittel bzw. Materialien eignen sich für Auftragungen auf Papier und Textilien ebenso wie auf Holz, Metall, Kunststoffen, Glas, Keramik, Stein, auf der Haut oder auf sonstige Grundmaterialien mit rauher oder glatter Oberfläche.

Je nach gewünschtem Farbcharakter kann durch geeignete Mengenverhältnisse der einzelnen Komponenten oder durch weitere Zusätze der durchscheinende opake Effekt der Abstriche bzw. der Auftragungen ebenso leicht eingestellt bzw. verändert werden wie die Deckkraft, der Glanz, die Polierfähigkeit oder die Wasservermalbarkeit und die Haftfähigkeit auf unterschiedlichen Untergründen sowie die Wasserfestigkeit nach dem Trocknen.

Derartige Einstellungen und Veränderungen können bereits vorab bei der Herstellung erfolgen oder aber auch erst vom Anwender in breitem Umfang vorgenommen werden.

Einsetzbar sind die Erfindungsgemäßen Mittel bzw. Materialien je nach Bestandteilen und nach Konsistenz beispielsweise in Dochtschreibgeräten aller Art, in sogenannten Ventilstiften, in Auftragsgeräten mit Kugeln oder auch zum Aufbringen und/oder zum Vermalen mit Pinseln, Schabern oder mit den Fingern.

Als Auftragungen hiermit können beispielsweise Beschriftungen ebenso erstellt werden wie Zeichnungen, Ein- oder Auf färbungen, Gemälde, Colorierungen, Aquarelle oder sonstige künstlerische Darstellungen vielfältiger Art. Von besonderem Vorteil hierbei ist es, daß sowohl beliebige Verdünnungen ebenso leicht möglich sind wie Verdickungen, daß die Abstriche auch mehrfach überstrichen werden können und daß Beimischungen anderer Komponenten - im Rahmen der Verträglichkeit - in sehr breitem Spektrum möglich sind.

Das vorgeschlagene wässrige Schreib-, Zeichen- oder Malmittel bzw. das flüssige oder pastöse Auftragsmaterial eignet sich sehr gut für fast alle Anwendungen, die sonst entweder nur mit reinen wässrigen Mitteln oder andererseits nur mit Ölfarben, Lacken oder sonstigen Mitteln mit vorwiegend organischen Lösungsmitteln möglich sind und kann diese bekannten aber oft problematischen Mittel vielfach ersetzen.

Aufgrund fehlender organischer Lösungsmittel oder sonstiger bedenklicher Stoffe, sind die vorgeschlagenen Mittel und Materialien auch physiologisch und ökologisch weitestgehend unbedenklich und in der Regel auch für die Verwendung durch Kinder geeignet.

## Patentansprüche

1. Wässriges Schreib-, Zeichen- oder Malmittel, als flüssiges oder pastöses Auftragsmaterial, bestehend aus
a) Wasser,
b) Bindemittel,
c) Netzmittel und ggf.
d) Farbmittel,
e) weiteren Zusätzen,
e1) wie Konservierungsmittel,
e2) Verdickungsmittel,
e3) Füllstoff und/oder
ex) sonstigen Zusatzstoffen,
**dadurch gekennzeichnet** ,
daß das Bindemittel ein Wachs oder ein Wachsgemisch in emulgierter oder in dispergierter Form ist oder enthält und das Schreib-, Zeichen- oder Malmittel
a) 40 bis 80 Gew.-% Wasser,
b) 10 bis 50 Gew.-% Wachs oder Wachsgemisch,
c) 0,1 bis 2 Gew.-% Netzmittel bzw. Emulgator und
d) 0,1 bis 10 Gew.-% Farbmittel,
e) 0,01 bis 20 Gew.-% weitere Zusätze
enthält.

2. Mittel nach Anspruch 1,
**dadurch gekennzeichnet**,
daß das Bindemittel ein Wachs oder ein Wachsgemisch in emulgierter oder in dispergierter Form ist oder enthält und das Schreib-, Zeichen- oder Malmittel
a) 40 bis 80 Gew.-% Wasser,
b) 10 bis 50 Gew.-% Wachs oder Wachsgemisch,
c) 0,3 bis 1 Gew.-% Netzmittel,
d) 0,1 bis 10 Gew.-% Farbmittel
e1) 0,01 bis 0,2 Gew.-% Konservierungsmittel,
e2) 1 bis 3 Gew.-% Verdickungsmittel und
e4) 0,8 bis 1 Gew.-% Dispergiermittel,
enthält.

3. Mittel nach Anspruch 1,
**dadurch gekennzeichnet**,
daß das Bindemittel ein Wachs oder ein Wachsgemisch in emulgierter oder in dispergierter Form ist oder enthält und das Schreib-, Zeichen- oder Malmittel
a) 50 bis 77 Gew.-% Wasser,
b) 15 bis 45 Gew.-% Wachs oder Wachsgemisch,
c) 0,1 bis 1 Gew.-% Netzmittel bzw. Emulgator
d) 1 bis 5 Gew.-% Farbmittel,
e1) 0,01 bis 0,2 Gew.-% Konservierungsmittel,
e2) 0 bis 5 Gew.-% Verdickungsmittel,
e4) 0 bis 2 Gew.-% Dispergiermittel und
ex) 0 bis 10 Gew.-% sonstige Zusätze
enthält.

4. Mittel nach einem der vorhergehenden Ansprüche,
**dadurch gekennzeichnet,**
daß das Wachs oder das Wachsgemisch bereits als Mischungskomponente in emulgierter oder in dispergierter Form vorliegt.

5. Mittel nach einem der vorhergehenden Ansprüche,
**dadurch gekennzeichnet**,
daß das Wachs ein Bienenwachs, Montanwachs, Carnaubawachs, Paraffinwachs, Montanawachs, Polyethylenwachs, Polypropylenwachs oder ein Gemisch zweier oder mehrerer derartiger Wachse ist.

6. Mittel nach einem der vorhergehenden Ansprüche,
**dadurch gekennzeichnet**,
daß die Teilchengröße der Wachspartikel < 1 µm ist.

7. Mittel nach einem der Ansprüche 1 bis 5,
**dadurch gekennzeichnet**,
daß die Teilchengröße der Wachspartikel 3 bis 8 µm beträgt.

8. Mittel nach einem der vorhergehenden Ansprüche,
**dadurch gekennzeichnet**,
daß das Netzmittel und / oder der Emulgator ein Lanolin-Sulfosuccinat, ein ethoxyliertes Lanolin oder Lanolinöl, ein Polyethylen-glycerin-monoisostearat, ein Polyethylen-glycerin-monolaureat, ein Polyoxyethylen-glycerin-monooleat und/oder ein ethoxylierter Fettalkohol ist.

9. Mittel nach einem der vorhergehenden Ansprüche,
**dadurch gekennzeichnet,**
daß es Hydroxypropylgalaktomannan und/oder ein sonstiges weiteres Bindemittel enthält.

10. Mittel nach einem der vorhergehenden Ansprüche,
**dadurch gekennzeichnet,**
daß das Konservierungsmittel ein Isothiazolinon oder ein 2-Brom-2-nitro-1,3-propandiol oder ein Gemisch dieser Substanzen ist.

11. Mittel nach einem der vorhergehenden Ansprüche,
**dadurch gekennzeichnet**,
daß das Farbmittel ein wasserlöslicher Farbstoff oder eine Mischung wasserlöslicher Farbstoffe ist.

12. Mittel nach Anspruch 11,
**dadurch gekennzeichnet,**
daß der Farbstoff oder die Mischung wasserlöslicher Farbstoffe ein Farbstoffpulver ist.

13. Mittel nach einem der Ansprüche 1 bis 10,
**dadurch gekennzeichnet,**
daß das Farbmittel ein Pigment oder ein Gemisch mehrerer Farb-Pigmente ist.

14. Mittel nach Anspruch 13,
**dadurch gekennzeichnet,**
daß das Farb-Pigment oder das Gemisch mehrerer Farb-Pigmente als Pigmentdispersion vorliegt.

15. Mittel nach Anspruch 14,
**dadurch gekennzeichnet,**
daß die Pigmentdispersion als Pigmentteig vorliegt.

16. Mittel nach einem der vorhergehenden Ansprüche,
**dadurch gekennzeichnet,**
daß es Calciumcarbonat oder Öl als weitere Zusätze enthält.

17. Mittel nach Aspruch 16
**dadurch gekennzeichnet,**
daß das Öl ein Paraffinöl ist.

## Claims

1. Aqueous writing, marking or painting means, as liquid or pasty application material, consisting of
a) water
b) binding means
c) wetting means and optionally
d) colouring means
e) further additives
e1) such as preserving means,
e2) thickening means,
e3) filler and/or
ex) other additive substances,
characterised in that the binding means is or contains a wax or wax mixture in emulsified or dispersed form and the writing, marking or painting means contains
a) 40 to 80 weight percent of water,
b) 10 to 50 weight percent of wax or wax mixture,
c) 0.1 to 2 weight percent of wetting means or emulsifier and
d) 0.1 to 10 weight percent of colouring means,
e) 0.01 to 20 weight percent of further additives.

2. Means according to claim 1, characterised in that the binding means is or contains a wax or wax mixture in emulsified or dispersed form and the writing, marking or painting means contains
a) 40 to 80 weight percent of water,
b) 10 to 50 weight percent of wax or wax mixture,
c) 0.3 to 1 weight percent of wetting means,
d) 0.1 to 10 weight percent of colouring means,
e1) 0.01 to 0.2 weight percent of preserving means,
e2) 1 to 3 weight percent of thickening means and
e4) 0.8 to 1 weight percent of dispersing means.

3. Means according to claim 1, characterised in that the binding means is or contains a wax or wax mixture in emulsified or dispersed form and the writing, marking or painting means contains
a) 50 to 77 weight percent of water,
b) 15 to 45 weight percent of wax or wax mixture,
c) 0.1 to 1 weight percent of wetting means or emulsifier,
d) 1 to 5 weight percent of colouring means,
e1) 0.01 to 0.2 weight percent of preserving means,
e2) 0 to 5 weight percent of thickening means,
e4) 0 to 2 weight percent of dispersing means and
ex) 0 to 10 weight percent of other additives.

4. Means according to one of the preceding claims, characterised in that the wax or the wax mixture is already present as mixture components in emulsified or in dispersed form.

5. Means according to one of the preceding claims, characterised in that the wax is a beeswax, Montana wax, Camauba wax, paraffin wax, Montana wax, polyethylene wax or polypropylene wax or a mixture of two or more waxes of that kind.

6. Means according to one of the preceding claims, characterised in that the particle size of the wax particles < 1 micron.

7. Means according to one of claims 1 to 5, characterised in that the particle size of the wax particles amounts to 3 to 8 microns.

8. Means according to one of the preceding claims, characterised in that the wetting means and/or the emulsifier is a lanolin sulfosuccinate, an ethoxylised lanolin or lanolin oil, a polyethylene-glycerin-monoisostearate, a polyethylene-glycerin-monolaureate, a polyoxyethylene-glycerin-monooleate and/or an ethoxylised fatty alcohol.

9. Means according to one of the preceding claims, characterised in that it contains hydroxypropylgalactomannan and/or any further binding means.

10. Means according to one of the preceding claims, characterised in that the preserving means is a isothiazolinon or a 2-brom-2-nitro-1.3 propandiol or a mixture of these substances.

11. Means according to one of the preceding claims, characterised in that the colouring means is a water-soluble dye or a mixture of water-soluble dyes.

12. Means according to claim 11, characterised in that the dye or the mixture of water-soluble dyes is a dye powder.

13. Means according to one of claims 1 to 10, characterised in that the colouring means is a pigment or a mixture of several colour pigments.

14. Means according to claim 13, characterised in that the colour pigment or the mixture of several colour pigments is present as a pigment dispersion.

15. Means according to claim 14, characterised in that the pigment dispersion is present as a pigment cake.

16. Means according to one of the preceding claims, characterised in that it contains calcium carbonate or oil as further additives.

17. Means according to claim 16, characterised in that the oil is a paraffin oil.

## Revendications

1. Agent aqueux d'écriture, de dessin ou de peinture, sous forme d'un matériau d'application fluide ou pâteux, composé
a) d'eau,
b) de liant
c) d'agent mouillant, et éventuellement
d) de colorant,
e) d'autres additifs,
e1) comme un agent de conservation,
e2) un épaississant,
e3) un pigment de charge et/ou
ex) d'autres additifs,
**caractérisé en ce que**
le liant est ou contient une cire ou un mélange de cires sous une forme émulsionnée ou dispersée, et l'agent d'écriture, de dessin ou de peinture contient
a) 40 à 80 % en masse d'eau,
b) 10 à 50 % en masse de cire ou d'un mélange de cires,
c) 0,1 à 2 % en masse d'agent mouillant ou d'émulsifiant et
d) 0,1 à 10 % en masse de colorant,
e) 0,01 à 20 % en masse d'autres additifs.

2. Agent selon la revendication 1,
**caractérisé en ce que**
le liant est ou contient une cire ou un mélange de cires sous une forme émulsionnée ou dispersée, et l'agent d'écriture, de dessin ou de peinture contient
a) 40 à 80 % en masse d'eau,
b) 10 à 50 % en masse de cire ou d'un mélange de cires,
c) 0,3 à 1 % en masse d'agent mouillant,
d) 0,1 à 10 % en masse de colorant,
e1) 0,01 à 0,2 % en masse d'agent de conservation,
e2) 1 à 3 % en masse d'épaississant, et
e4) 0,8 à 1 % en masse d'agent dispersant.

3. Agent selon la revendication 1,
**caractérisé en ce que**
le liant est ou contient une cire ou un mélange de cires sous une forme émulsionnée ou dispersée, et l'agent d'écriture, de dessin ou de peinture contient
a) 50 à 77 % en masse d'eau,
b) 15 à 45 % en masse de cire ou d'un mélange de cires,
c) 0,1 à 1 % en masse d'agent mouillant ou d'émulsifiant,
d) 1 à 5 % en masse de colorant,
e1) 0,01 à 0,2 % en masse d'agent de conservation,
e2) 0 à 5 % en masse d'épaississant,
e4) 0 à 2 % en masse d'agent dispersant, et
ex) 0 à 10 % en masse d'autres additifs.

4. Agent selon l'une des revendications précédentes,
**caractérisé en ce que**
la cire ou le mélange de cires se présente déjà en tant que composante de mélange sous une forme émulsionnée ou dispersée.

5. Agent selon l'une des revendications précédentes,
**caractérisé en ce que**
la cire est une cire d'abeille, une cire de lignite, une cire de carnauba, une cire de paraffine, une cire "Montana", une cire de polyéthylène, une cire de polypropylène ou un mélange de deux cires de ce type ou plus.

6. Agent selon l'une des revendications précédentes,
**caractérisé en ce que**
la taille des particules de cire est < 1 µm.

7. Agent selon l'une des revendications 1 à 5,
**caractérisé en ce que**
la taille des particules de cire est comprise entre 3 et 8 µm.

8. Agent selon l'une des revendications précédentes,
**caractérisé en ce que**
l'agent mouillant et/ou l'émulsifiant sont/est un sulfosuccinate de lanoline, une lanoline éthoxylée ou une huile de lanoline, un mono-isostéarate de polyéthylène-glycérine, un mono-lauréate de polyéthylène-glycérine un mono-oléate de polyoxyéthylène-glycérine et/ou un alcool gras éthoxylé.

9. Agent selon l'une des revendications précédentes,
**caractérisé en ce**
qu'il contient du galactomannane d'hydroxypropyle et/ou un autre liant quelconque.

10. Agent selon l'une des revendications précédentes,
**caractérisé en ce que**
l'agent de conservation est une isothiazolinone ou un 2-bromo-2-nitro-1,3-propanediol, ou un mélange de ces substances.

11. Agent selon l'une des revendications précédentes,
**caractérisé en ce**
le colorant est une matière colorante soluble dans l'eau ou un mélange de matières colorantes solubles dans l'eau.

12. Agent selon la revendication 11,
**caractérisé en ce que**
la matière colorante ou le mélange de matières colorantes solubles dans l'eau est une couleur en poudre.

13. Agent selon l'une des revendications 1 à 10,
**caractérisé en ce que**
la matière colorante est un pigment ou un mélange de plusieurs pigments colorés.

14. Agent selon la revendication 13,
**caractérisé en ce que**
le pigment coloré ou le mélange de plusieurs pigments colorés se présente sous la forme d'une dispersion de pigment(s).

15. Agent selon la revendication 14,
**caractérisé en ce que**
la dispersion de pigment se présente sous la forme de pigment en pâte.

16. Agent selon l'une des revendications précédentes,
**caractérisé en ce**
qu'il contient du carbonate de calcium ou de l'huile en tant qu'autres additifs.

17. Agent selon la revendication 16,
**caractérisé en ce que**
l'huile est une huile de paraffine.
